(19) Europäisches Patentamt

European Patent Office

Office européen des brevets

(11) **EP 1 137 281 A2**

(12) **EUROPEAN PATENT APPLICATION**

(43) Date of publication:
26.09.2001 Bulletin 2001/39

(51) Int Cl.⁷: $H04N\ 7/16$

(21) Application number: **01302414.6**

(22) Date of filing: **15.03.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **15.03.2000 GB 0006275**

(72) Inventor: **Hay, Cameron**
**Witney, Oxfordshire OX8 5LA (GB)**

(74) Representative: **Cozens, Paul Dennis et al**
**Mathys & Squire**
**100 Grays Inn Road**
**London WC1X 8AL (GB)**

(71) Applicant: **Television Monitoring Services Limited**
**Witney, Oxfordshire OX8 5LA (GB)**

(54) **Method of measuring brand exposure and apparatus therefor**

(57) Brand exposure is measured in a video stream which may be a direct television signal, or a video playback of a recorded programme which has been, or is proposed to be, broadcast. A reference mask is provided representing a trade mark of the brand whose exposure is to be measured. Frames are captured from the video stream, and each captured frame is searched using the reference mask to determine a respective correlation value indicative of the likelihood of the presence of the trade mark of the mask in that captured frame in dependence upon correlation between the mask and part of that captured frame. The brand exposure value is calculated for the video stream in dependence upon each determined correlation values and optionally upon the scale and position of each correlation, audience rating, and a weighting for the mask. For a particular video stream, a brand exposure value is produced which is repeatable and, for different video streams, brand exposure values are produced which enable a repeatable objective comparison to be made between brand exposure in the video streams.

FIG. 1

EP 1 137 281 A2

**Description**

This invention relates to the measurement of brand exposure.

The organiser of an event which is to be broadcast on television typically allows sponsors of the event to display their trade marks (logos or other trade mark indicia) so as to advertise the sponsors' brands, the trade marks being displayed at various strategic positions so that they will receive exposure during the broadcasting of the event. For example, if a sports event such as a football or rugby match is being sponsored, a sponsor will be permitted to place advertising hoardings alongside the pitch, the number, size and position of the hoardings being agreed between the sponsor and the organiser, and determining the sponsorship fee.

Advertisers sponsor broadcast events because they expect to achieve brand exposure and thereby an advertising effect. Naturally, sponsors would appreciate feedback on the brand exposure achieved by particular hoarding sites.

The value to the advertiser of sponsoring an event has, in the past, been difficult to evaluate. One evaluation method has been to employ individuals to monitor the television broadcasts, each individual having a stopwatch which is used to measure the duration of exposure of a particular hoarding. Naturally, such measurements are subjective and barely repeatable. It is therefore difficult to compare brand exposure reliably. The results of such research, together with other research methods including viewer interviews, etc., are sometimes offered as reports of the "media value".

Since the sponsorship of popular events such as football matches, motor racing and athletics is extremely expensive, it is desirable for the interested parties to be able to measure more reliably the brand exposure, and thereby the advertising effect and impact that has been achieved from the broadcasting of the event.

In accordance with a first aspect of the present invention, there is provided a method of measuring brand exposure in a video stream which may be a direct television signal, or a video playback of a recorded programme which has been, or is proposed to be, broadcast. The method comprises the steps of: providing a reference mask representing a trade mark; capturing frames from the video stream; searching each captured frame using the reference mask to determine a respective correlation value indicative of the likelihood of the presence of the trade mark of the mask in that captured frame in dependence upon correlation between the mask and part of that captured frame; and calculating a brand exposure value for the video stream in dependence upon the determined correlation values. The method therefore produces, for a particular video stream, a brand exposure value which is repeatable and, for different video streams, brand exposure values which enable a repeatable objective comparison to be made between brand exposure in the video streams.

(In this specification, the term "frame" is not intended to be construed narrowly so that, in the case of a frame made up by two temporally-spaced fields of interlaced horizontal lines, it requires both fields of a frame. The term "frame" is intended to be construed broadly so that it covers, for example, just one of those fields, or a frame constituted by duplication of one of those fields, or a frame produced by temporal interpolation between those two fields. The term "frame" is also intended to cover, for example, a digital image such as a bitmap that is captured or extracted directly from a digital bit stream such as an MPEG2 signal provided by a digital television set-top box or a DVD player.)

The determined correlation value for each frame may simply have either of only two possible values (e.g. yes/no or 0/1). However, the determined correlation value for each frame preferably has one of a multiplicity of possible values (e.g. any value in the range 0.00 to 1.00 to two decimal places). In this case, in the calculating step, such a determined correlation value is preferably then taken into account only if it lies within a particular range of the values (e.g. is above a particular threshold). The extent of the range (e.g. the threshold level) is preferably adjustable during calibration of the method. Once the threshold level has been agreed, it may then be fixed and employed to obtain a result which provides a good measure of the brand exposure. Once the method has been calibrated, it then enables the brand exposure in different video streams to be quantified and compared in an objective way. Furthermore, in the calculating step, the magnitude of such a determined correlation value within said range is preferably taken into account. In other words, a good correlation can provide a greater contribution to the brand exposure value than a not-so-good correlation.

Preferably, each searching step includes the step of determining a respective scale value in dependence upon the scale of said part of the captured frame relative to the mask, and, in the calculating step, the brand exposure value is calculated in dependence upon both the determined correlation values and the respective determined scale values. In this way, a large scale display of a trade mark in a frame can provide a greater contribution to the brand exposure value than a smaller scale display of the mark.

Preferably, each searching step includes the step of determining a respective position value in dependence upon the position of said part of the captured frame relative to the complete frame, and, in the calculating step, the brand exposure value is calculated in dependence upon both the determined correlation values and the respective determined position values. In this way, the display of a trade mark at the centre of a frame can provide a greater contribution to the brand exposure value than at the edge of the frame.

Preferably, the method further includes the step of providing an audience rating value, and, in the calculating step, the brand exposure value is calculated in dependence upon both the determined correlation values and the audience rating value. In this way, the display of a trade mark during prime time when the audience rating is high can provide a greater contribution to the brand exposure value than, say, a weekday mid-afternoon broadcast. The audience rating value which is provided may be varied for different frames, and, in the calculating step, the brand exposure value may be calculated in dependence upon both the determined correlation values and the respective audience rating values. In this way, the display of a trade mark during, say, a penalty shoot-out in a football match can provide a greater contribution to the brand exposure value than during the half-time break when viewers might have a temporary break from watching their televisions.

In the case of a plurality of presences of the trade mark of the mask in a particular frame, preferably, in the searching step, the method is capable of determining a plurality of correlation values for that frame. In this way, the multiple display of a trade mark, say around the edge of a race track, can provide a greater contribution to the brand exposure value than a single presence of the mark.

Preferably, the reference mask is one of a plurality of different such reference masks representing the same trade mark, and such searching steps are performed for each of the reference masks. The different masks can take account of the different appearances of the same mark, for example when viewed at different camera angles or at different camera panning speeds.

Preferably a respective mask weighting value is provided for each reference mask; and, in the calculating step, the brand exposure value is calculated in dependence upon both the determined correlation values and the respective mask weighting values.

Additionally or alternatively, the reference mask may be one of a plurality of different such reference masks representing different trade marks; such searching steps may be performed for each of the reference masks; and, in the calculating step, a plurality of brand exposure values may be calculated for the different trade marks. The method can therefore be used to measure, at the same time, the brand exposure of more than one trade mark.

In a case where more than one reference mask is employed, preferably a respective mask weighting value is provided for each reference mask; and, in the calculating step, the brand exposure value is calculated in dependence upon both the determined correlation values and the respective mask weighting values. In this way, correlation with, say, a large mask, a well-defined mask, or a high-contrast mask can provide a greater contribution to the brand exposure value than an identical correlation with a smaller mask, a blurred mask, or a low-contrast mask.

Preferably, the method further comprises the steps of: storing each of the frames which contributes to the brand exposure value(s); and storing the respective value(s) determined from that frame. The stored data can then be inspected to confirm the validity of the results or when adjusting the algorithms used to produce the brand exposure value.

Preferably, the calculating step involves summing the correlation values or a function of each correlation value. For example, in the case where the video stream of a programme has a frame rate of 25 Hz, and in a simple case where the determined correlation value for each frame has either of only two possible values, namely 0 and 0.04, the sum of the correlation values represents the duration in seconds of exposure of the trade mark in the programme. Of course, if desired, this value may be divided by the total duration in seconds of the programme and multiplied by 100 to provide a "percentage exposure" value for the trade mark in the programme.

In accordance with a second aspect of the present invention, there is provided a method of measuring brand exposure on screen within a broadcast programme, comprising the steps of: identifying at least one reference image mask representing a logo or other trade mark indicia identifying the brand being advertised; capturing frame images from the broadcast programme; searching each captured frame image to identify if the likelihood of the presence of the reference image mask is above a predetermined threshold; and calculating the brand exposure in accordance with an algorithm that is a function of at least the duration of exposure of the identified reference image mask.

By setting the likelihood of presence of the reference image mask or "readability factor" to correspond to a level that is likely to be noticeable to a viewer and readily identifiable when exposed for a short period, it is possible to produce measurements that are repeatable and can easily be compared as between different events and broadcasts. This allows an advertiser to make sponsorship decisions in a more objective way and bid for the more effective opportunities and hoarding sites. He can also choose trade mark indicia for use at the event that are more likely to be quickly identified. For example, the effect of choosing to place trade mark indicia of small size on each player can be compared to the effect of a single large hoarding to determine the relative values of these advertising opportunities.

In accordance with a third aspect of the present invention, there is provided a method of measuring brand exposure within a broadcast transmission, comprising the steps of: storing at least one reference image mask representing a logo or other trade mark indicia representing a brand being advertised; capturing a sequence of frame images from the broadcast; running image searching software which outputs a parameter representing the likelihood of the presence of each image mask in each captured screen image; and computing a brand exposure measurement from at least said output parameters.

In accordance with a fourth aspect of the present invention, there is provided an apparatus arranged to perform a method according to the first aspect of the invention.

The apparatus for measuring brand exposure in a video stream may comprise: means (such as a digital storage device) for providing a reference mask representing a trade mark; means (such as a frame grabber) for capturing frames from the video stream; means (such as a processor and associated memory) for searching each captured frame using the reference mask to determine a respective correlation value indicative of the likelihood of the presence of the trade mark of the mask in that captured frame in dependence upon correlation between the mask and part of that captured frame; and means (such as the, or another, processor and associated memory) for calculating a brand exposure value for the video stream in dependence upon the determined correlation values.

The determined correlation value for each frame may simply have either of only two possible values.

However, the determined correlation value for each frame preferably has one of a multiplicity of possible values.

In this case, in the calculating step, such a determined correlation value is preferably then taken into account only if it lies within a particular range of the values.

Furthermore, the calculating means is preferably adapted to take into account the magnitude of such a determined correlation value within said range.

Preferably, the searching means includes means for determining a respective scale value in dependence upon the scale of said part of the captured frame relative to the mask, and, the calculating means is adapted to calculate the brand exposure value in dependence upon both the determined correlation values and the respective determined scale values.

Preferably, the searching means includes means for the determination of a respective position value in dependence upon the position of said part of the captured frame relative to the complete frame, and the calculating means is adapted to calculate the brand exposure value in dependence upon both the determined correlation values and the respective determined position values.

Preferably, the apparatus further includes means for providing an audience rating value, and the calculating means is adapted to calculate the brand exposure value in dependence upon both the determined correlation values and the audience rating value.

The audience rating value which is provided may be varied for different frames, and the calculating means may be adapted to calculate the brand exposure value in dependence upon both the determined correlation values and the respective audience rating values.

In the case of a plurality of presences of the trade mark of the mask in a particular frame, the searching means is preferably adapted such that the apparatus is capable of determining a plurality of correlation values for that frame.

Preferably, the reference mask is one of a plurality of different such reference masks representing the same trade mark, and the searching means is adapted to search each captured frame for each of the reference masks.

Preferably a respective mask weighting value is provided for each reference mask; and the calculating means is adapted to calculate the brand exposure value in dependence upon both the determined correlation values and the respective mask weighting values.

Additionally or alternatively, preferably the reference mask is one of a plurality of different such reference masks representing different trade marks; the searching means is adapted to search each captured frame for each of the reference masks; and the calculating means is adapted to calculate a plurality of brand exposure values for the different trade marks.

In a case where more than one reference mask is employed, preferably a respective mask weighting value is provided for each reference mask; and the calculating means is adapted to calculate the brand exposure value in dependence upon both the determined correlation values and the respective mask weighting values.

Preferably, the apparatus further comprises: means for storing each of the frames which contributes to the brand exposure value(s); and means for storing the respective value(s) determined from that frame.

Preferably, the calculating means comprises means for summing the correlation values or a function of each correlation value.

In accordance with a fifth aspect of the present invention, there is provided an apparatus for measuring brand exposure in a video stream, comprising: means (such as a digital storage device) for providing a reference mask representing a trade mark; means (such as a frame grabber) for capturing frames from the video stream; means (such as a processor and associated memory) for searching each captured frame using the reference mask to determine a respective correlation value indicative of the likelihood of the presence of the trade mark of the mask in that captured frame in dependence upon correlation between the mask and part of that captured frame; and means (such as the, or another, processor and associated memory) for calculating a brand exposure value for the video stream in dependence upon the determined correlation values.

In accordance with a sixth aspect of the present invention, there is provided an apparatus for measuring brand exposure within a broadcast transmission, comprising: means for storing at least one reference image mask representing a logo or other trade mark indicia representing a brand being advertised; means for capturing a sequence of frame images from the broadcast; processor means for running image searching software which outputs a parameter representing the likelihood of the presence of each image mask in each captured screen image; and means for computing a brand exposure measurement from at least said output parameters.

Features of any aspect of the invention may be combined with or interchanged with features of any other aspect as desired. Method features may be applied to apparatus aspects and *vice versa*. Features which are provided independently may be provided dependently, and *vice versa*.

Specific embodiments of the present invention will now be described, purely by way of example, with reference to the accompanying drawings, in which:

Figure 1 — is a block diagram of an apparatus for measuring brand exposure;

Figure 2 — shows a display on a computer screen of a series of captured frame images, together with a series of reference image masks used for measuring the brand exposure of various logos;

Figure 3 — shows a display on a computer screen of a sample set of data retrieved during use of the method in respect of two reference image masks identified as Duckhams1 and Duckhams2;

Figure 4 — shows a captured frame image and beneath it the reference image mask which has been identified twice within that frame;

Figure 5 — is a flow diagram illustrating one part of an example of a method performed by the apparatus of Figure 1;

Figure 6 — is a flow diagram illustrating another part of an example of a method performed by the apparatus of Figure 1;

Figure 7 — is a flow diagram illustrating another part of a different example of a method performed by the apparatus of Figure 1.

Figures 8 & 9 — show two tables of data used by the method of Figure 7;

Figures 10 & 11 — show two tables of data produced by the method of Figure 7; and

Figure 12 — is a flow diagram illustrating an example of a method which complements the example given in Figure 7.

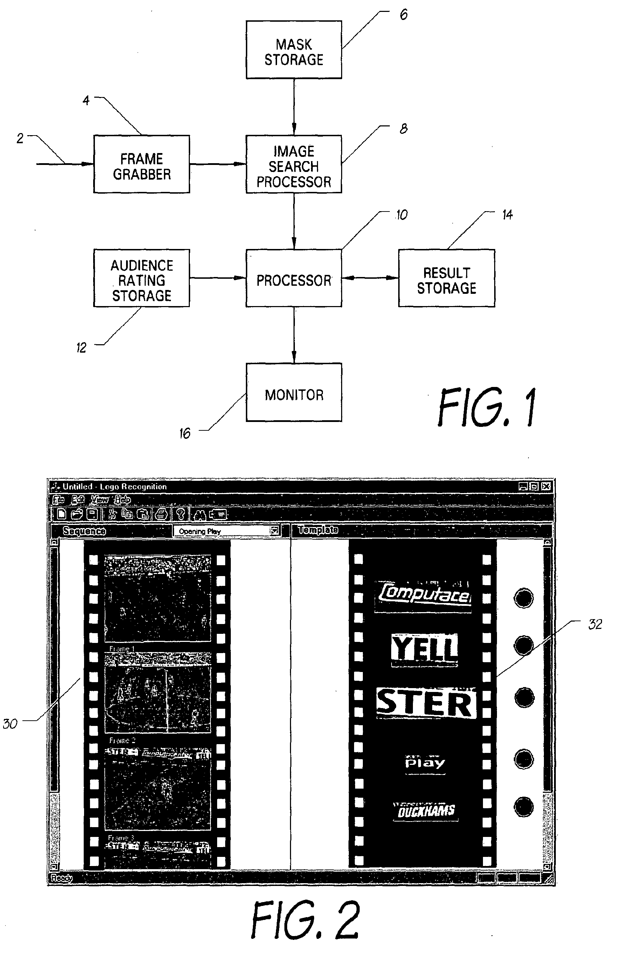

Referring to Figure 1, a broadcast signal 2 is input to a frame grabber 4 which captures frame images at predetermined intervals. Reference image masks representing a trade mark or other brand indicia representing a brand being advertised are stored on a disk 6. A processor 8 runs image-searching software to identify the presence of each reference image in the captured frame images. The output from the processor 8 is fed to a processor 10 which computes the advertising effect. Audience ratings for the broadcast supplied at 2 are stored in storage device 12 and are also used by processor 10 to compute the brand exposure in accordance with a stored algorithm.

The broadcast image input at 2 may be directly off air or from a videotape or other storage.

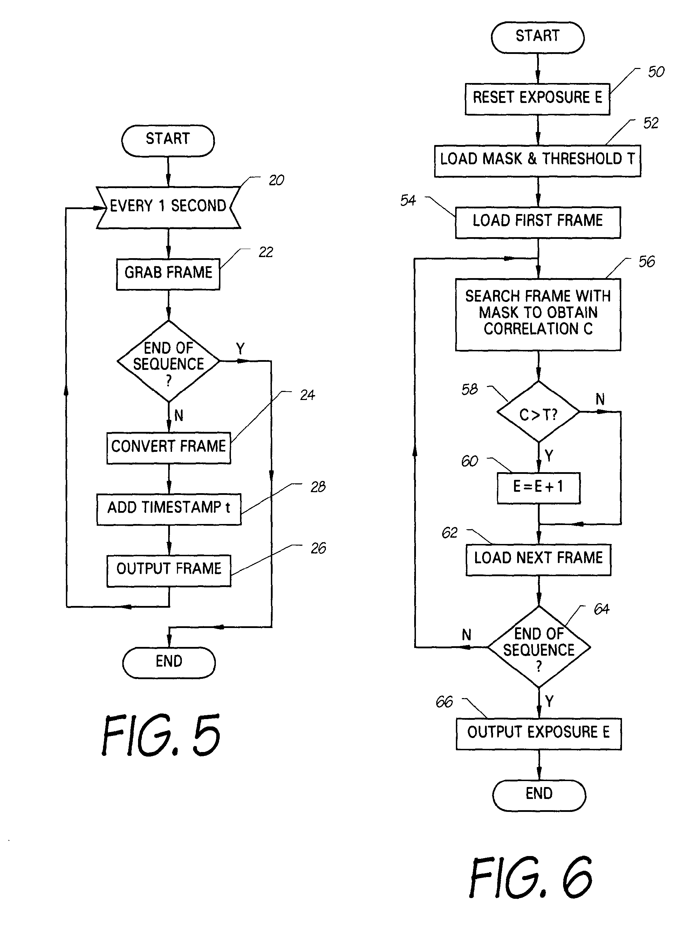

The frame grabber 4 is a commercially available component which, as shown in Figure 5, is typically set to capture one image per second, at steps 20,22. Suitable frame grabbers include a Snapper (trade mark) which contains circuitry to convert, at step 24, the captured frame image into a digital image compressed to a bitmap or jpeg format. A Bandit (trade mark) or TCI (trade mark) frame grabber that outputs a bitmap image could also be used. The frame grabber 4 produces an image, output at step 26, that is compatible with the image search software being used.

The reference image masks stored on disk 6 are selected carefully to represent the brand. For example, if the brand is YELLOW PAGES, then the mask may be YELL which is perhaps the most distinctive part of the mark likely to prompt consumer recognition. If the advertiser is MacDonalds, then the golden arches or "Happy M" image may be used as the basis of the reference image masks. Typically, the best results will be obtained if a number of masks are chosen representing the logo and characteristic parts of the logo.

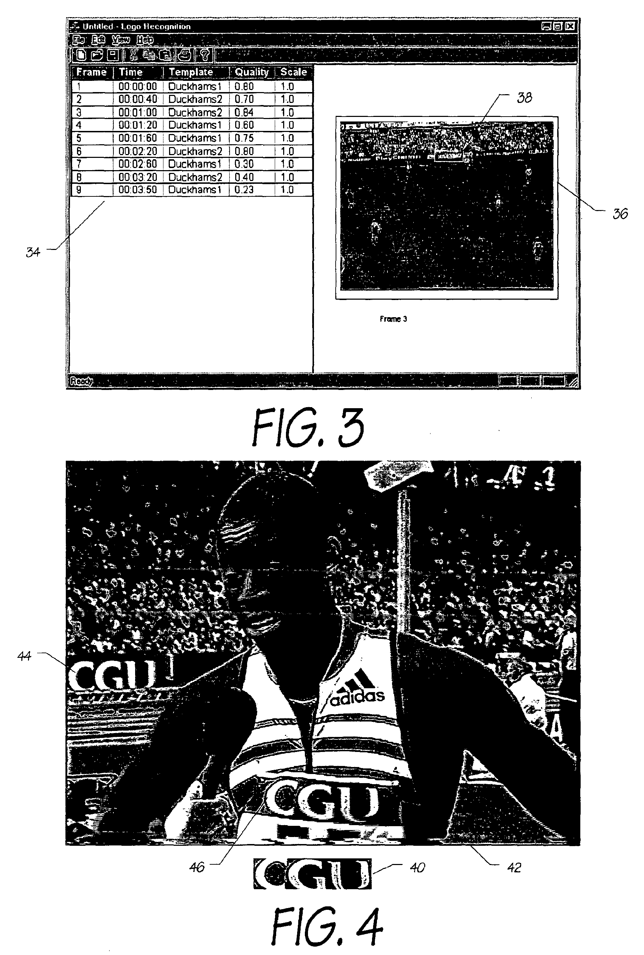

Image search software is also now commercially available. One such program is called WiT and is supplied by Coreco of Canada. Typically, such software allows the user to set acceptance thresholds to distinguish the goodness of fit or correlation between the mask and the image in the captured frame which is required to return a positive result. These can be set for a particular run in consultation with the client for whom the measurement is being made. The threshold may be said to represent a readability factor for the image. Preferably, each frame which returns a positive result is stored, possibly in compressed form so that it can be viewed on a monitor 16 (Figure 1) to confirm by visual inspection that the identified image does recognisably represent the reference image mask. A series of such stored images 30 is shown in Figure 2, alongside the reference image masks 32 used during that run. For example, the third reference image mask containing the letters STER is clearly visible in Frame 3 and the following frame. Each stored image is stored with a channel date and time stamp for identification purposes. This may be added to the frame at step 28 shown in Figure 5.

For each brand, a set of masks may be provided. A set can be created automatically from a basic mask by scaling and/or rotating and/or blurring the image to simulate various possible camera angles or panned shots. For example, a word mark appearing on a hoarding at the side of a playing field would appear rotated. To produce a set which gives results that can be used to compare brand exposure of various brands exposed at the same event, it is desirable to use a set of masks for each brand generated by exactly the same criteria. Some proprietary software, such as the WiT image processing suite mentioned above, provides tools for this purpose.

Each mask can also be allocated a weighting factor to reflect the value of the presence of such an image within the broadcast. Therefore, the larger masks can have higher weighting factors and the blurred ones lower factors.

Figure 3 shows sample data 34 obtained using two different reference image masks named Duckhamsl and Duckhams2 which relate to the Duckhams trade mark which is displayed on a hoarding alongside the football pitch featured in a broadcast. One captured image frame 36 from that broadcast is illustrated on the right hand side of the screen dump. This is identified as Frame 3 and it will be seen from the data on the left hand side that the Duckhams2 reference image mask has been identified as present in that frame with a quality or readability factor of 0.84. In the frame, the actual image of the Duckhams trade mark has been highlighted by a white rectangle 38. The presentation of the data in this way would allow the Duckhams advertising manager to choose an appropriate threshold by scanning the frames and comparing the images and setting a quality below which appearances will be discarded. Other factors which may be used in the algorithm for calculating the brand exposure are also shown in the data set of the table in Figure 3. These include the time for which the image was displayed on screen and the relative scale or size of the image as it appears to the viewer.

Figure 4 gives another example of a reference image mask 40, in this case representing the trade mark CGU, together with a captured image frame 42 in which that mask has been identified twice with a high readability factor. These appearances are at slightly different angles, and in the case of the letters CGU on the hoarding 44, the bottom parts of the letters have been obscured. This would result in that image having a lower readability factor than the same image 46 which appears on the athlete's attire. This lower readability factor would probably still be well above the threshold set by the CGU advertising manager, as in practice the brand is receiving significant exposure in this image by the dual presence. It will be appreciated that the number of times a reference image mask is identified in a frame can also be used in the algorithm to calculate brand exposure. (The athlete in this picture is Julian Golding.)

Audience ratings data for the broadcast may be obtained from a number of sources. The audience rating may be provided as a constant for the broadcast or be broken down by time so that a more accurate measurement can be made if the audience is likely to vary during the transmission time. This is particularly important in measuring the brand exposure when there is a likelihood of channel switching, as when adverts start, or the programme being turned off such as when a football match lacks excitement. Typically, the audience data will be determined from other sources, such as the data gathered by BARB (the Broadcasters' Audience Research Board).

The processor 10 uses a stored algorithm to compute the brand exposure. One algorithm that could be employed to derive a brand exposure measurement is set out below:

$$E = \Sigma_n w_n \, t \, \mathrm{x} A$$

where:

$E$     is the brand exposure;
$W_n$   is a weighting factor for the $n$th image mask;
$t$      is the duration of the image in seconds which matched with a readability factor above the predetermined threshold; and
$A$    is the audience rating.

This will give a points value for each broadcast. Such a value can be used as part of a payment structure for the sponsorship or be used by the advertiser to compare the relative values of various events or advertising types. The advertiser can be supplied with the statistics for each mask and the stored images so that the results can be quickly verified. The statistics are conveniently presented in a spreadsheet form so that the brand exposure value could be recalculated with a different algorithm or with the acceptance threshold set at a more rigorous level. Generally, hyperlinks to the frame images are included in the spreadsheet to allow the client to drill down into the underlying data conveniently.

It will be appreciated that many variations may be made to the implementation of the method described. For example, the whole of the apparatus of Figure 1 may be provided by a single microcomputer, such as a PC, fitted with a frame grabber card.

In a simple example of the method, the processor(s) 8,10 may be programmed to perform the process shown at high level in Figure 6. In this case, it is assumed that there is only one mask. In step 50, a brand exposure value E is reset to zero. In step 52, the image data of the mask and the threshold $T$ for the mask are loaded from the mask storage disk 6 to the processor(s) 8,10. In step 54, the first frame of the video sequence is loaded from the frame grabber 4 to the processor(s) 8,10. In step 56, the search software is used to search the loaded frame using the mask to obtain a correlation value $C$. In step 58, the correlation value $C$ is compared with the threshold value $T$, and if the former is the greater (a "hit") then in step 60 the brand exposure value $E$ is incremented by one. In step 62, the next frame of the video sequence is loaded, and the process loops back to step 56, unless it is determined in step 64 that the next frame has failed to load due to the end of the video sequence having been reached. In this case, the accumulated brand exposure value $E$ is output in step 66. It will be appreciated that, with this simple implementation, the output brand exposure value is equal to the number of frames of the video sequence which have produced a correlation with the mask having a value C which is greater than the threshold $T$.

In a development of the simple method of Figure 6 to take account of the degree of correlation, step 60 ($E = E + 1$) which increments the brand exposure value by one may be replaced by some other increment, such as $E = E + C$ to take direct account of the correlation which was found, or $E=E+C-T$ to take account of how much better than the threshold the correlation is.

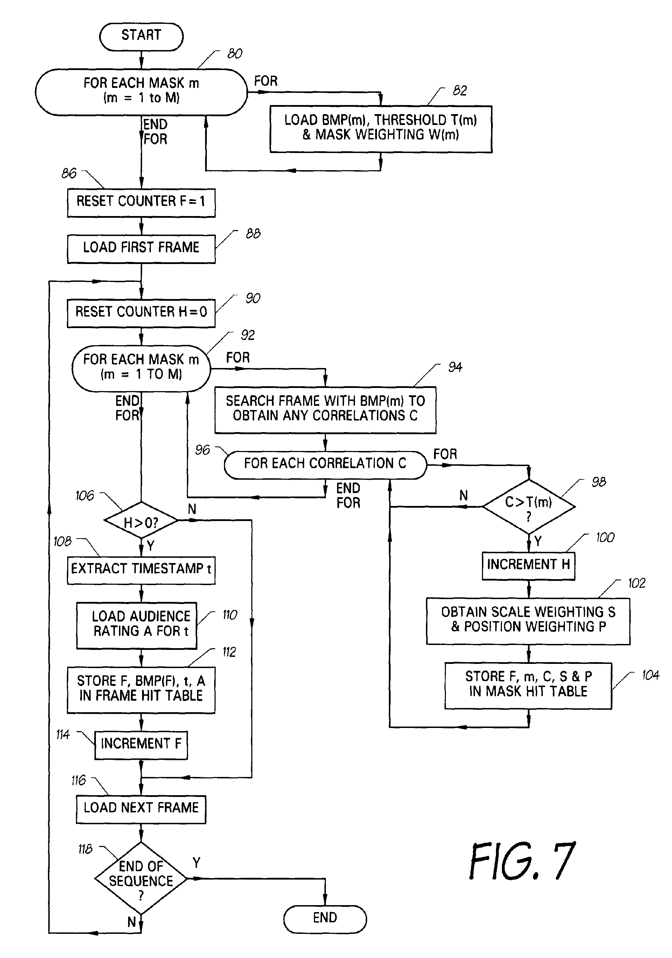

A more complex implementation of the method will now be described with reference to Figures 7 to 12. This implementation permits:

- the brand exposure for more than one brand to be measured;
- each brand to have more than one mask;
- each search of a frame with a particular mask to produce more than one hit, as mentioned above with reference to Figure 4;
- each mask to have its own correlation threshold;
- each mask to have its own weighting factor;
- the degree of correlation of a hit to be taken into account;
- the scale of a hit to be taken into account;
- the position of a hit to be taken into account; and
- the audience rating for a hit to be taken into account.

However, it will be appreciated that not all of these features need be included.

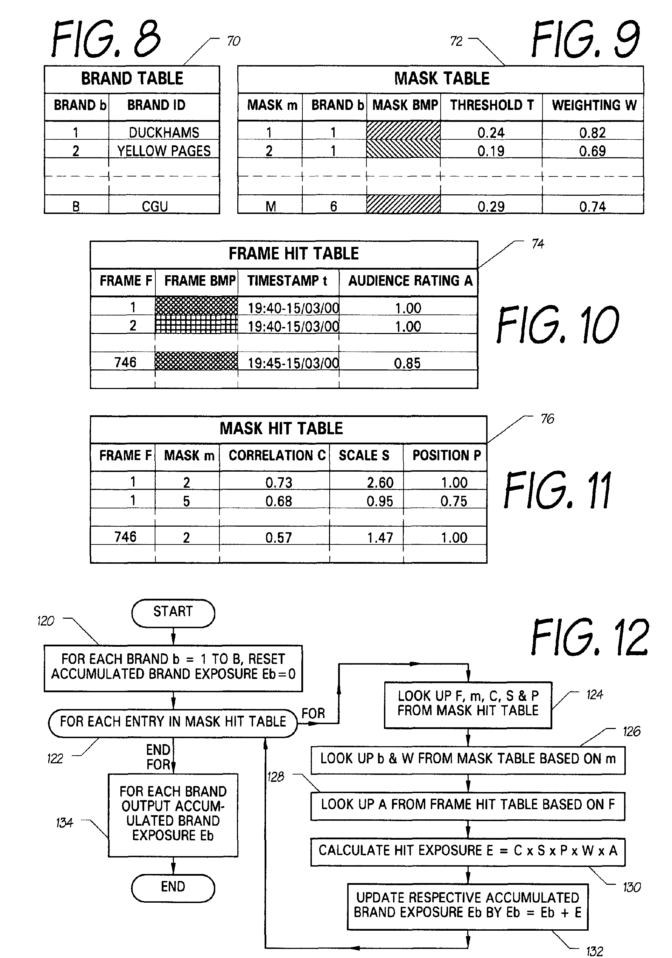

Referring to Figure 8, a brand table 70 is used which includes an entry for each of $B$ brands. Each entry comprises a brand number $b$ ($b$ = 1 to $B$) and a brand description. Referring to Figure 9, a mask table 72 is set up which includes an entry for each of $M$ masks. Each entry comprises a mask number $m$ ($m$ = 1 to $M$) for each mask, the brand number $b_m$ of the brand to which the mask relates, the bitmap, $bmp_m$, of that mask, the correlation threshold value $T_m$ for that mask, and a weighting factor $W_m$ for that mask. When the process of Figure 7 is performed, it produces a frame hit table 74 as shown in Figure 10, and a mask hit table 76 as shown in Figure 11. The frame hit table 74 includes an entry for each frame which has produced a hit, comprising a frame number $F$, a bitmap or compressed image $bmp_F$ of the frame, the timestamp $t$ of the frame, and the audience rating $A$ for the frame. The mask hit table 76 includes an entry for each hit, comprising the frame number $F$ in which the hit was produced, the mask number $m$ of the mask which produced the hit, the correlation value $C$ of the hit, a scale value $S$ relating to the scale of the hit, and a position value $P$ relating to the position of the hit.

Referring now to Figure 7, when the method is implemented, in steps 80,82, the bitmaps, $bmp_1$ to $bmp_M$, of the masks are loaded from the mask table 72, together with the respective thresholds $T_m$ and mask weightings $W_m$. Then, in step 86, a counter for the frame number $F$ is reset to 1; in step 88, the first frame of the video sequence is loaded; and, in step 90, a counter $H$ for the number of hits in the frame is reset to zero. Then, in steps 92,94,96 a process is performed for each of the masks, and in steps 96,98,100,102,104 a sub-process is performed for each correlation which is obtained with each of those masks. Specifically, in step 94, the search software is used to obtain any correlations between the current mask $bmp_m$ and the current frame, i.e. any correlations with a correlation value C greater than a predetermined threshold which is less than any of the mask thresholds $T_m$. For each correlation found, in step 98, the correlation value $C$ is compared with the threshold $T_m$ for the current mask. If the former is not greater, that correlation is discarded. However, if it is greater, in step 100, the hits-per-frame counter $H$ is incremented by one, and, in step 102, a scale weighting value $S$ and position weighting value $P$ are obtained from the search software. The scale weighting value $S$ may simply be proportional to the pixel size of the portion of the frame which produced the hit, divided by the pixel size of the current mask. However, more complex relationships may be used. The position weighting value $P$ may simply one of two values, for example 1.00 if the portion of the frame which produced the hit is within a predetermined central region of the frame, and a predetermined lesser value if it is not. Again, however, more complex relationships may be used. Then, in step 104, the frame number $F$, the mask number $m$ for the current mask, and the correlation value $C$, scale value $S$ and position value $P$ are added as an entry in the mask hit table 76.

After the mask processing of steps 92-104 for all of the masks has been performed on the current frame, in step 106, the value of the hits-per-frame counter $H$ is checked. If it is zero, steps 108-114 are bypassed. However, if not, meaning that at least one hit was obtained with the current frame, then: in step 108 the timestamp $t$ is extracted from the current frame; in step 110, the audience rating value $A$ for that time stamp $t$ is obtained from the audience rating storage 12; in step 112, the frame number $F$, the bitmap of the frame (or a compressed form of it) $bmp_F$, the timestamp $t$, and the audience rating value $A$ are added as an entry in the frame hit table 74; and, in step 114, the frame counter $F$ is incremented by one.

After the frame processing of steps 106-114 has been performed on the current frame, in step 116, the next frame in the video sequence is loaded, and the process loops back to step 90, unless it is determined in step 118 that the next frame has failed to load due to the end of the video sequence having been reached.

As a result of the process described with reference to Figure 7, the frame hit table 74 and mask hit table 76 will have been completed for the video sequence. The entries in the tables 74,76 are then processed in the manner that will now be described with reference to Figure 12.

In an initialisation step in Figure 12, for each brand $b$ (b = 1 to $B$), a respective accumulated brand exposure value $E_b$ is reset to zero. Then, in steps 122-132, a contribution for each entry in the mask hit table 76 to a respective one of the brand exposure values is calculated and added to that brand exposure value. Specifically, for each entry in the mask hit table 76, in step 124, the frame number $F$, mask number $m$, correlation value $C$, scale value $S$ and position value $P$ are looked up. Then, in step 126, based on the mask number $m$, the relevant brand number $b$ and mask weighting value $W$ are looked up from the mask table 72. Furthermore, in step 128, based on the frame number $F$, the relevant audience rating $A$ is looked up from the frame hit table 74. In step 130, the contribution $E$ to the brand exposure provided by the hit in question is calculated in accordance with $E = C$ x $S$ x $P$ x $W$ x $A$. The contribution $E$ is then added to the relevant accumulated brand exposure value $E_b$, i.e. $E_b = E_b + E$. Once all of the entries in the mask hit table 76 have been processed, it will be appreciated that the values $E_b$ ($b$ = 1 to $B$) represent the brand exposures in the whole video sequence for the brands $b$ ($b$ = 1 to $B$) respectively.

As mentioned above, the results are presented in such a manner that a user can drill down through the results. For example, the highest, first level presentation of the results may comprise a display of, for each brand $b$, the brand ID taken from the brand table 70 of Figure 8 and the respective accumulated brand exposure value $E_b$. The user can then select one of the brands and be given a second level presentation of the results which may comprise a display of, for each mask for the selected brand, the mask bitmap taken from the mask table 72 of Figure 9 and the contribution which that mask provided to the brand exposure value $E_b$. The user can then select one of the masks and be given a third level presentation of the results which may comprise a list of the frames with which that mask produced at least one hit and the respective correlation value(s). The user can then select one of the listed frames, and that frame is then displayed with the hits for the respective mask highlighted in the frame, optionally with any hits for other masks for the same brand also highlighted.

In the example described above, frames are grabbed from the video sequence at a rate of 1 frame per second. Other sampling rates may be employed as desired. Indeed, if processing and storage capacity permits, every frame may be grabbed.

In the example given above, a number of hits in sequentially grabbed frames produce the same contribution to the brand exposure value as the same number of identical hits in arbitrarily temporally spaced frames. If desired, additional weightings may be applied so that consecutive hits produce a greater contribution than nonconsecutive hits.

In the example described above with reference to Figures 7 to 12, in step 98 each correlation value $C$ is compared with the threshold value $T_m$ for the current mask, and only if the correlation value $C$ exceeds the threshold value $T_m$ is any further account taken of the correlation. In a first modification to this procedure, the correlation value $C$ is weighted with the relevant scale weighting value S and position weighting value $P$ before being compared with the threshold value $T_m$. In other words, step 98 is preceded by step 102, and step 98 is replaced by the test "$C$ x $S$ x $P > T_m$". In a further modification, the step 98 is omitted so that the first step of the "for" loop of step 96 is step 100. Thus, the data related to any correlation becomes stored in steps 104, 112. In this case, thresholding may instead be performed as part of the "for" loop 122 shown in Figure 12. This has the advantage that the effects of adjusting the threshold values $T_m$ can be assessed by repeating the method of Figure 12, without the necessity of repeating the method of Figure 7 and thus without re-running the video sequence and re-searching the video frames.

Video is conventionally acquired with each frame constituted by a pair of temporally offset fields of interlaced horizontal lines. Accordingly, in a grabbed frame, motion in the picture produces blur and or jaggedness. This can degrade the correlation process. In order to deal with this problem, the frame conversion step 24 described above with reference to Figure 5 may, for example, involve duplicating one of the fields of each grabbed frame and discarding the other field of that frame.

The example of the invention described above has been prototyped using, for the correlation processing, the WiT version 5.3 image processing suite by Coreco, Inc. of St. Laurent, Quebec, Canada, and particularly the "fast align" extension provided by that suite. Enhanced versions of that software, such as version 7.1 which was released after the claimed priority date, or other pattern recognition software, may alternatively be used.

It should be noted that the embodiments and examples of the invention have been described above purely by way of example and that many other modifications and developments may be made thereto within the scope of the present invention.

## Claims

1. A method of measuring brand exposure in a video stream, comprising the steps of:

   providing a reference mask representing a trade mark;
   capturing frames from the video stream;
   searching each captured frame using the reference mask to determine a respective correlation value indicative of the likelihood of the presence of the trade mark of the mask in that captured frame in dependence upon correlation between the mask and part of that captured frame; and
   calculating a brand exposure value for the video stream in dependence upon the determined correlation values.

2. A method as claimed in claim 1, wherein the determined correlation value for each frame has either of only two possible values.

3. A method as claimed in claim 1, wherein the determined correlation value for each frame has one of a multiplicity of possible values.

4. A method as claimed in claim 3, wherein, in the calculating step, such a determined correlation value is taken into account only if that determined correlation value lies within a particular range of the values.

5. A method as claimed in claim 4, wherein, in the calculating step, the magnitude of such a determined correlation value within said range is taken into account.

6. A method as claimed in any preceding claim, wherein:

   each searching step includes the step of determining a respective scale value in dependence upon the scale of said part of the captured frame relative to the mask; and
   in the calculating step, the brand exposure value is calculated in dependence upon both the determined correlation values and the respective determined scale values.

7. A method as claimed in any preceding claim, wherein:

   each searching step includes the step of determining a respective position value in dependence upon the position of said part of the captured frame relative to the complete frame; and
   in the calculating step, the brand exposure value is calculated in dependence upon both the determined correlation values and the respective determined position values.

8. A method as claimed in any preceding claim, wherein:

   the method further includes the step of providing an audience rating value; and
   in the calculating step, the brand exposure value is calculated in dependence upon both the determined correlation values and the audience rating value.

9. A method as claimed in claim 8, wherein:

   the provided audience rating value varies for different frames; and
   in the calculating step, the brand exposure value is calculated in dependence upon both the determined correlation values and the respective audience rating values.

10. A method as claimed in any preceding claim, wherein, in each searching step, in the case of a plurality of presences of the trade mark of the mask in the frame, the method is capable of determining a plurality of correlation values for that frame.

11. A method as claimed in any preceding claim, wherein:

    the reference mask is one of a plurality of different such reference masks representing the same trade mark; and
    such searching steps are performed for each of the reference masks.

12. A method as claimed in any preceding claim, wherein: the reference mask is one of a plurality of different such reference masks representing different trade marks; such searching steps are performed for each of the reference masks; and
    in the calculating step, a plurality of brand exposure values are calculated for the different trade marks.

13. A method as claimed in claim 11 or 12, wherein a respective mask weighting value is provided for each reference mask; and in the calculating step, the brand exposure value is calculated in dependence upon both the determined correlation values and the respective mask weighting values.

14. A method as claimed in any preceding claim, further comprising the steps of:

    storing each of the frames which contributes to the brand exposure value(s); and

storing the respective value(s) determined from that frame.

**15.** A method as claimed in any preceding claim, wherein the calculating step comprises summing the correlation values or a function of each correlation value.

**16.** A method of measuring brand exposure on screen within a broadcast programme, comprising the steps of:

identifying at least one reference image mask representing a logo or other trade mark indicia identifying the brand being advertised;
capturing frame images from the broadcast programme;
searching each captured frame image to identify if the likelihood of the presence of the reference image mask is above a predetermined threshold; and
calculating the brand exposure in accordance with an algorithm that is a function of at least the duration of exposure of the identified reference image mask.

**17.** A method of measuring brand exposure within a broadcast transmission, comprising the steps of:

storing at least one reference image mask representing a logo or other trade mark indicia representing a brand being advertised;
capturing a sequence of frame images from the broadcast;
running image searching software which outputs a parameter representing the likelihood of the presence of each image mask in each captured screen image; and
computing a brand exposure measurement from at least said output parameters.

**18.** An apparatus arranged to perform a method as claimed in any preceding claim.

**19.** An apparatus for measuring brand exposure in a video stream, comprising:

means (such as a digital storage device) for providing a reference mask representing a trade mark;
means (such as a frame grabber) for capturing frames from the video stream;
means (such as a processor and associated memory) for searching each captured frame using the reference mask to determine a respective correlation value indicative of the likelihood of the presence of the trade mark of the mask in that captured frame in dependence upon correlation between the mask and part of that captured frame; and
means (such as the, or another, processor and associated memory) for calculating a brand exposure value for the video stream in dependence upon the determined correlation values.

**20.** An apparatus for measuring brand exposure within a broadcast transmission, comprising:

means for storing at least one reference image mask representing a logo or other trade mark indicia representing a brand being advertised;
means for capturing a sequence of frame images from the broadcast;
processor means for running image searching software which outputs a parameter representing the likelihood of the presence of each image mask in each captured screen image; and
means for computing a brand exposure measurement from at least said output parameters.

FIG. 1

FIG. 2

| Frame | Time | Template | Quality | Scale |
|-------|----------|-----------|---------|-------|
| 1 | 00:00:00 | Duckhams1 | 0.80 | 1.0 |
| 2 | 00:00:40 | Duckhams2 | 0.70 | 1.0 |
| 3 | 00:01:00 | Duckhams2 | 0.84 | 1.0 |
| 4 | 00:01:20 | Duckhams1 | 0.60 | 1.0 |
| 5 | 00:01:60 | Duckhams1 | 0.75 | 1.0 |
| 6 | 00:02:20 | Duckhams2 | 0.80 | 1.0 |
| 7 | 00:02:60 | Duckhams1 | 0.30 | 1.0 |
| 8 | 00:03:20 | Duckhams2 | 0.40 | 1.0 |
| 9 | 00:03:50 | Duckhams1 | 0.23 | 1.0 |

FIG. 3

FIG. 4

START

START

RESET EXPOSURE E — 50

EVERY 1 SECOND — 20

LOAD MASK & THRESHOLD T — 52

GRAB FRAME — 22

54 — LOAD FIRST FRAME

END OF SEQUENCE ? — Y

SEARCH FRAME WITH MASK TO OBTAIN CORRELATION C — 56

N

CONVERT FRAME — 24

58 — C > T? — N

ADD TIMESTAMP t — 28

60 — Y

E = E + 1

OUTPUT FRAME — 26

62 — LOAD NEXT FRAME

END

N — END OF SEQUENCE ? — 64

FIG. 5

66 — Y

OUTPUT EXPOSURE E

END

FIG. 6

13

START

*80* FOR EACH MASK m (m = 1 to M)

FOR → *82* LOAD BMP(m), THRESHOLD T(m) & MASK WEIGHTING W(m)

END FOR

*86* RESET COUNTER F = 1

*88* LOAD FIRST FRAME

*90* RESET COUNTER H = 0

*92* FOR EACH MASK m (m = 1 TO M)

FOR → *94* SEARCH FRAME WITH BMP(m) TO OBTAIN ANY CORRELATIONS C

*96* FOR EACH CORRELATION C

FOR → *98* C > T(m) ?

N

Y → *100* INCREMENT H

*102* OBTAIN SCALE WEIGHTING S & POSITION WEIGHTING P

*104* STORE F, m, C, S & P IN MASK HIT TABLE

END FOR

END FOR

*106* H > 0?   N

Y

*108* EXTRACT TIMESTAMP t

*110* LOAD AUDIENCE RATING A FOR t

*112* STORE F, BMP(F), t, A IN FRAME HIT TABLE

*114* INCREMENT F

*116* LOAD NEXT FRAME

*118* END OF SEQUENCE ?   Y → END

N

*FIG. 7*

# FIG. 8

**BRAND TABLE** 70

| BRAND b | BRAND ID |
|---------|----------|
| 1 | DUCKHAMS |
| 2 | YELLOW PAGES |
| | |
| B | CGU |

# FIG. 9

72 **MASK TABLE**

| MASK m | BRAND b | MASK BMP | THRESHOLD T | WEIGHTING W |
|--------|---------|----------|-------------|-------------|
| 1 | 1 | | 0.24 | 0.82 |
| 2 | 1 | | 0.19 | 0.69 |
| | | | | |
| M | 6 | | 0.29 | 0.74 |

**FRAME HIT TABLE** 74

| FRAME F | FRAME BMP | TIMESTAMP t | AUDIENCE RATING A |
|---------|-----------|-------------|-------------------|
| 1 | | 19:40-15/03/00 | 1.00 |
| 2 | | 19:40-15/03/00 | 1.00 |
| | | | |
| 746 | | 19:45-15/03/00 | 0.85 |

# FIG. 10

**MASK HIT TABLE** 76

| FRAME F | MASK m | CORRELATION C | SCALE S | POSITION P |
|---------|--------|---------------|---------|------------|
| 1 | 2 | 0.73 | 2.60 | 1.00 |
| 1 | 5 | 0.68 | 0.95 | 0.75 |
| | | | | |
| 746 | 2 | 0.57 | 1.47 | 1.00 |
| | | | | |

# FIG. 12

START

120 FOR EACH BRAND b = 1 TO B, RESET ACCUMULATED BRAND EXPOSURE Eb = 0

122 FOR EACH ENTRY IN MASK HIT TABLE — FOR

END FOR

134 FOR EACH BRAND OUTPUT ACCUMULATED BRAND EXPOSURE Eb

END

124 LOOK UP F, m, C, S & P FROM MASK HIT TABLE

126 LOOK UP b & W FROM MASK TABLE BASED ON m

128 LOOK UP A FROM FRAME HIT TABLE BASED ON F

130 CALCULATE HIT EXPOSURE E = C x S x P x W x A

132 UPDATE RESPECTIVE ACCUMULATED BRAND EXPOSURE Eb BY Eb = Eb + E